# EUROPÄISCHE PATENTSCHRIFT

(11) **EP 3 715 483 B1**
(45) Veröffentlichungstag und Bekanntmachung des Hinweises auf die Patenterteilung: **05.05.2021**
(21) Anmeldenummer: 19165155.3
(22) Anmeldetag: 26.03.2019
(51) Int. Cl.: C22B 5/10, C22B 9/10, C22B 11/02

(54) **VERFAHREN ZUR HERSTELLUNG EINER PGM-SAMMLERLEGIERUNG**
METHOD FOR PRODUCING A PGM COLLECTOR ALLOY
PROCÉDÉ DE FABRICATION D'UN ALLIAGE PGM DE COLLECTEUR

(43) Veröffentlichungstag der Anmeldung: 30.09.2020
(73) Patentinhaber: Heraeus Deutschland GmbH & Co. KG, 63450 Hanau (DE)
(72) Erfinder: WINKLER, Holger, 63450 Hanau (DE); BAUER-SIEBENLIST, Bernhard, 63450 Hanau (DE); DITTRICH, Regina, 63450 Hanau (DE)
(74) Vertreter: Heraeus IP

(56) Entgegenhaltungen:
- EP-A1- 2 666 876
- US-A- 4 892 631
- DONG HAIGANG ET AL: "Recovery of platinum group metals from spent catalysts: A review", INTERNATIONAL JOURNAL OF MINERAL PROCESSING, Bd. 145, 7. Juni 2015 (2015-06-07), Seiten 108-113, XP029313833, ISSN: 0301-7516, DOI: 10.1016/J.MINPRO.2015.06.009

## Beschreibung

Die Erfindung betrifft ein Verfahren zur Herstellung einer PGM-Sammlerlegierung, welche Kupfer und/oder Silber umfasst.

Die in der vorliegenden Offenbarung verwendete Abkürzung "PGM" steht für Platingruppenmetall ausgewählt aus der Gruppe bestehend aus Platin, Palladium und Rhodium.

Das erfindungsgemäße Verfahren zur Herstellung einer PGM-Sammlerlegierung findet insbesondere statt im Rahmen eines schmelzmetallurgischen Verfahrens zur Aufarbeitung PGM-haltiger Natrium- und/oder Kaliumalumosilikatträger, speziell PGM-haltiger Heterogenkatalysatoren mit Natrium- und/oder Kaliumalumosilikatträger. "Schmelzmetallurgische Aufarbeitung" bezieht sich dabei auf die Rückgewinnung von PGM auf schmelzmetallurgischem Wege.

Hierin wird der Begriff "Natrium- und/oder Kaliumalumosilikatträger" verwendet. Gemeint sind damit Natrium- und/oder Kaliumalumosilikatträgermaterialien mit einer Schmelz- sowie gegebenenfalls Zersetzungstemperatur im Bereich oberhalb 1500°C, beispielsweise im Bereich von >1500 bis 1750°C. Der in diesem Zusammenhang verwendete Ausdruck "Schmelz- sowie gegebenenfalls Zersetzungstemperatur" kann bedeuten: Schmelzpunkt mit Zersetzung, Schmelzpunkt ohne Zersetzung, Schmelzbereich mit Zersetzung, Schmelzbereich ohne Zersetzung. Beispiele für Natrium- und/oder Kaliumalumosilikatträger im Sinne der vorliegenden Offenbarung umfassen solcherart Zeolithe wie beispielsweise Zeolith A. Die Natrium- und/oder Kaliumalumosilikatträger können Hydratwasser umfassen.

Bei PGM-haltigen Heterogenkatalysatoren handelt es sich um Katalysatorträger (kurz auch einfach als Träger bezeichnet), auf die ein oder mehrere PGM als katalytisch aktive Spezies aufgebracht sind (mit einem oder mehreren PGM beladene Katalysatorträger). Dabei können das oder die PGM in elementarer metallischer Form und/oder als PGM-Verbindung, insbesondere als PGM-Oxid auf dem Träger vorliegen. Der PGM-Gehalt (die PGM-Beladung) PGM-haltiger Heterogenkatalysatoren kann beispielsweise im Bereich von 0,01 bis 10 Gew.-% (Gewichts-%) liegen, bezogen auf PGM-beladenen Katalysatorträger.

PGM-haltige Heterogenkatalysatoren können verschiedensten Quellen entstammen. Beispiele umfassen Abluftreinigungskatalysatoren, Abgasreinigungskatalysatoren, zur Reingasherstellung verwendete Katalysatoren und Prozesskatalysatoren beispielsweise aus der chemischen, pharmazeutischen und petrochemischen Industrie.

Auf Grund hoher PGM-Preise ist eine Verwendung PGM-haltiger Heterogenkatalysatoren häufig nur dann wirtschaftlich, wenn das oder die PGM aus erschöpften PGM-haltigen Heterogenkatalysatoren zurückgewonnen werden können. Bei erschöpften PGM-haltigen Heterogenkatalysatoren handelt es sich um PGM-haltige Heterogenkatalysatoren, deren katalytische Aktivität während ihres Gebrauchs nachgelassen hat.

PGM-haltige Heterogenkatalysatoren mit Eignung zur schmelzmetallurgischen Aufarbeitung können insbesondere in Form PGM-haltigen refraktären Trägermaterials vorliegen. Das refraktäre Trägermaterial kann in Gestalt von Formkörpern wie beispielsweise Stränge, Zylinder, Pellets, Ringe, Multi-Loch-Ringe, Kugeln, Sattelkörper, Räder, Sessel, Quader, Plättchen, Schaumkörper oder Waben vorliegen. Die Formkörper können Durchmesser oder Größen beispielsweise im Bereich von etwa 0,1 bis 30 Millimetern haben. Häufig sind solche Formkörper porös.

Bei einem refraktären Trägermaterial handelt es sich um anorganisches nichtmetallisches und gegenüber hohen Temperaturen vergleichsweise widerstandsfähiges, hochschmelzendes Material. Beispielsweise kann es sich um keramisches Refraktärmaterial handeln. Beispiele für Refraktärmaterialien umfassen Aluminiumoxid, Titandioxid, Siliziumdioxid, Magnesiumoxid, Zirkonoxid, Mischoxide wie Cer/Zirkon-Mischoxide, Silikate, Titanate, Siliziumcarbid und Siliziumnitrid. Auch bei den schon vorerwähnten Natriumalumosilikaten und Kaliumalumosilikaten handelt es sich um Refraktärmaterial. Die Refraktärmaterialien als solche sind von Hause aus edelmetallfrei respektive PGM-frei.

Den hierin verwendeten Begriff "edelmetallfrei" oder "PGM-frei" versteht der Fachmann als edelmetallfrei respektive PGM-frei bis auf einen für ein betreffendes Material technisch praktisch unvermeidbaren niedrigen Edelmetall- bzw. PGM-Gehalt beispielsweise im Bereich von >0 bis 25 Gew.-ppm (Gewichts-ppm).

Bei der schmelzmetallurgischen Aufarbeitung PGM-haltiger Heterogenkatalysatoren können diese bei Bedarf zunächst zu Pulver zermahlen und dann schmelzmetallurgisch in PGM und Refraktärmaterial getrennt werden. Während der schmelzmetallurgischen Behandlung erfolgt die Abtrennung des oder der PGM durch Einschmelzen des Heterogenkatalysators in einem Schmelzofen. Dem Material im Schmelzofen wird üblicherweise Sammlermetall wie beispielsweise Eisen, Nickel, Blei oder Zinn zugegeben. Optional können noch Schlackebildner zugegeben werden. Im Zuge des Schmelzprozesses wird der Anteil des Refraktärmaterials in eine Schlackephase überführt, während das oder die PGM im Sammlermetall unter Bildung einer PGM-Sammlerlegierung gebunden werden. Die geschmolzene Schlacke und die geschmolzene PGM-Sammlerlegierung bilden ein Zweiphasensystem, welches eine Phasenseparierung aufgrund des Dichteunterschieds erlaubt. Die PGM-Konzentration in der PGM-Sammlerlegierung ist deutlich höher als im Heterogenkatalysator-Ausgangsmaterial und ermöglicht im Anschluss eine wirtschaftliche Darstellung des oder der PGM als Metall oder als PGM-Verbindung nach entsprechender Aufarbeitung der PGM-Sammlerlegierung.

Wie eingangs schon erwähnt, kann die vorliegende Erfindung die Herstellung einer PGM-Sammlerlegierung insbesondere im Rahmen eines schmelzmetallurgischen Verfahrens zur Aufarbeitung PGM-haltiger Heterogenkatalysatoren, konkret solcher PGM-haltiger Heterogenkatalysatoren mit Natrium- und/oder Kaliumalumosilikatträger, betreffen.

Bei PGM-haltigen Heterogenkatalysatoren mit Natrium- und/oder Kaliumalumosilikatträger handelt es sich demnach um Heterogenkatalysatoren in Form von mit einem oder mehreren PGM ausgestatteten Trägern aus Natrium- und/oder Kaliumalumosilikat.

PGM-haltige Heterogenkatalysatoren mit Natrium- und/oder Kaliumalumosilikatträger können gemeinsam mit PGM-haltigen Heterogenkatalysatoren auf Basis anderer refraktärer Trägermaterialien (von Natrium- und/oder Kaliumalumosilikatträgern verschiedene refraktäre Träger) schmelzmetallurgisch aufgearbeitet werden.

PGM-haltige Heterogenkatalysatoren mit Natrium- und/oder Kaliumalumosilikatträger bergen allerdings besondere Herausforderungen, sobald sie zumindest im Wesentlichen sortenrein schmelzmetallurgisch aufgearbeitet werden sollen, beispielsweise mit einem Anteil PGM-haltiger Heterogenkatalysatoren mit Natrium- und/oder Kaliumalumosilikatträger von >70 bis <100 Gew.-% oder bevorzugt >80 bis <100 Gew.-%, bezogen auf ein schmelzmetallurgisch aufzuarbeitendes Gemisch PGM-haltiger Heterogenkatalysatoren. In Abgrenzung von "im Wesentlichen sortenrein" bedeutet "vollständig sortenrein" ein Arbeiten mit einem Anteil PGM-haltiger Heterogenkatalysatoren mit Natrium- und/oder Kaliumalumosilikatträger von 100 Gew.-%, bezogen auf schmelzmetallurgisch aufzuarbeitenden PGM-haltigen Heterogenkatalysator respektive auf ein schmelzmetallurgisch aufzuarbeitendes Gemisch PGM-haltiger Heterogenkatalysatoren, also ein Arbeiten mit einer einheitlichen Art von PGM-haltigem Heterogenkatalysator mit Natrium- und/oder Kaliumalumosilikatträger (mit demselben Natrium- und/oder Kaliumalumosilikatträger bei gleicher oder verschiedener PGM-Ausstattung) respektive mit mehreren verschiedenen Arten von PGM-haltigen Heterogenkatalysatoren mit Natrium- und/oder Kaliumalumosilikatträger (mit verschiedenen Natrium- und/oder Kaliumalumosilikatträgern bei gleicher oder verschiedener PGM-Ausstattung).

Die vollständig sortenreine oder die im Wesentlichen sortenreine schmelzmetallurgische Aufarbeitung PGM-haltiger Heterogenkatalysatoren mit Natrium- und/oder Kaliumalumosilikatträger erfordert die Anwendung sehr hoher Schmelztemperaturen beispielsweise im Bereich von >1500 bis 1750 °C. Dies geht einher mit einem sehr hohen Energieverbrauch. Bei diesen hohen Schmelztemperaturen sind Natrium- und/oder Kaliumoxid, d.h. dem Natrium- und/oder Kaliumalumosilikat entstammendes Natrium- und/oder Kaliumoxid flüchtig und können nach Entweichen aus der Schmelze zu Ablagerungen im Abgassystem bis hin zu einer gefährlichen Verstopfung des Abgassystems des verwendeten Schmelzofens führen. Außerdem kann eine Feuerfest-Ausmauerung des verwendeten Schmelzofens bei solch hohen Temperaturen vom alkalischen Natrium- und/oder Kaliumoxid angegriffen werden.

Die EP 2 666 876 A1 offenbart ein Verfahren zur Rückgewinnung von PGM, umfassend das Durchführen von Reduktionsschmelzen mit einem Behandlungszielelement, enthaltend PGM, Kupfer und/oder Kupfer(I)oxid, und Flussmittel, um dadurch eine geschmolzene Schlacke und eine Kupferlegierung, enthaltend PGM, zu erzeugen.

Die Anmelderin konnte ein Verfahren entwickeln, welches nicht nur die im Wesentlichen sortenreine sondern auch die vollständig sortenreine schmelzmetallurgische Aufarbeitung PGM-haltiger Natrium- und/oder Kaliumalumosilikatträger respektive von PGM-haltigen Heterogenkatalysatoren mit Natrium- und/oder Kaliumalumosilikatträger bei vergleichsweise niedrigen Temperaturen von <1450°C erlaubt.

Die Erfindung besteht in einem Verfahren zur Herstellung einer PGM-Sammlerlegierung. Das Verfahren umfasst die Schritte:
(1) Bereitstellen von (a) Kupfer und/oder Silber, (b) schmelzmetallurgisch aufzuarbeitendem bzw. aufarbeitbarem Material in Form mindestens eines mit mindestens einem PGM ausgestatteten Natrium- und/oder Kaliumalumosilikatträgers, und (c) mindestens einer Verbindung ausgewählt aus der Gruppe bestehend aus Eisenoxiden, Calciumoxid, Magnesiumoxid, Calciumcarbonat, Magnesiumcarbonat, Natriumcarbonat und Kaliumcarbonat,
(2) gemeinsames Schmelzen der in Schritt (1) bereitgestellten Materialien bei einer Temperatur im Bereich von 1250 bis <1450°C unter Wahrung eines 100:40- bis 100:20-Gewichtsverhältnisses der in den Teilschritten (1b) und (1c) bereitgestellten Materialien und eines 35:65- bis 80:20-Gewichtsverhältnisses von Kupfer und/oder Silber: PGM (insbesondere das mindestens eine PGM) unter Bildung einer zwei Phasen von unterschiedlicher Dichte umfassenden Schmelze,
(3) Abtrennen der oberen Phase niedriger Dichte aus geschmolzener Schlacke von der unteren Phase hoher Dichte aus geschmolzener PGM-Sammlerlegierung unter Ausnutzung des Dichteunterschieds,
(4) Abkühlen und Erstarren lassen der voneinander abgetrennten Schmelzphasen, und
(5) Vereinnahmen der erstarrten PGM-Sammlerlegierung.

Die im erfindungsgemäßen Verfahren während Schritt (2) sich bildende PGM-Sammlerlegierung umfasst demnach 35 bis 80 Gew.-% Kupfer und/oder Silber und 65 bis 20 Gew.-% des mindestens einen PGM; sie kann dabei beispielsweise bis zu 30 Gew.-% eines oder mehrerer anderer Elemente (von Kupfer, Silber und dem mindestens einen PGM verschiedene Elemente) umfassen. Bevorzugt besteht sie aus 35 bis 80 Gew.-% Kupfer und/oder Silber und 65 bis 20 Gew.-% des mindestens einen PGM.

Handelt es sich bei dem in Teilschritt (1b) bereitgestellten schmelzmetallurgisch aufzuarbeitenden bzw. aufarbeitbarem Material um PGM-haltigen Heterogenkatalysator mit Natrium- und/oder Kaliumalumosilikatträger, beispielsweise um eine Restmenge oder eine Fehlcharge oder um einen erschöpften derartigen Katalysator, so kann die Erfindung auch als ein Verfahren zur Aufarbeitung von PGM-haltigem Heterogenkatalysator mit Natrium- und/oder Kaliumalumosilikatträger verstanden werden. Das Verfahren umfasst in diesem Fall die Schritte:
(1) Bereitstellen von (a) Kupfer und/oder Silber, (b) mindestens eines PGM-haltigen Heterogenkatalysators in Form eines mit mindestens einem PGM ausgestatteten Natrium- und/oder Kaliumalumosilikatträgers, und (c) mindestens einer Verbindung ausgewählt aus der Gruppe bestehend aus Eisenoxiden, Calciumoxid, Magnesiumoxid, Calciumcarbonat, Magnesiumcarbonat, Natriumcarbonat und Kaliumcarbonat,
(2) gemeinsames Schmelzen der in Schritt (1) bereitgestellten Materialien bei einer Temperatur im Bereich von 1250 bis <1450°C unter Wahrung eines 100:40- bis 100:20-Gewichtsverhältnisses der in den Teilschritten (1b) und (1c) bereitgestellten Materialien und eines 35:65- bis 80:20-Gewichtsverhältnisses von Kupfer und/oder Silber: PGM (das mindestens eine PGM) unter Bildung einer zwei Phasen von unterschiedlicher Dichte umfassenden Schmelze,
(3) Abtrennen der oberen Phase niedriger Dichte aus geschmolzener Schlacke von der unteren Phase hoher Dichte aus geschmolzener PGM-Sammlerlegierung unter Ausnutzung des Dichteunterschieds,
(4) Abkühlen und Erstarren lassen der voneinander abgetrennten Schmelzphasen, und
(5) Vereinnahmen der erstarrten PGM-Sammlerlegierung.

In Teilschritt (1a) des erfindungsgemäßen Verfahrens werden Kupfer und/oder Silber bereitgestellt. Das Kupfer und/oder Silber dienen dabei als Sammlermetall(e) oder genauer gesagt zumindest als das/die wesentlichen Sammlermetall(e) mit einem Gewichtsanteil von beispielsweise >60 Gew.-% an der Gesamtmenge allen im erfindungsgemäßen Verfahren verwendeten Sammlermetalls. Insbesondere dienen das Kupfer und/oder Silber als das/die einzige(n) Sammlermetall(e) für das mindestens eine PGM und bilden gemeinsam damit während Schritt (2) eine geschmolzene PGM-Sammlerlegierung als untere Schmelzphase mit hoher Dichte. Mit anderen Worten, das Kupfer und/oder Silber werden als das/die wesentliche(n) Sammlermetall(e), insbesondere als das/die einzige(n) Sammlermetall(e) in Schritt (2) zugesetzt bzw. verwendet.

In Teilschritt (1b) des erfindungsgemäßen Verfahrens wird schmelzmetallurgisch aufzuarbeitendes bzw. aufarbeitbares Material in Form mindestens eines mit mindestens einem PGM ausgestatteten Natrium- und/oder Kaliumalumosilikatträgers bereitgestellt. Dabei handelt es sich im Allgemeinen um PGM-haltigen Heterogenkatalysator mit Natrium- und/oder Kaliumalumosilikatträger, insbesondere um erschöpften PGM-haltigen Heterogenkatalysator mit Natrium- und/oder Kaliumalumosilikatträger. Erschöpfter PGM-haltiger Heterogenkatalysator mit Natrium- und/oder Kaliumalumosilikatträger kann geringe Mengenanteile beispielsweise >0 bis 5 Gew.-% weiterer Stoffe (von PGM und Natrium- und/oder Kaliumalumosilikatträger verschiedene Stoffe) enthalten, insbesondere Verunreinigungen wie beispielsweise organische Verbindungen und/oder Kohlenstoff. Solche Stoffe können falls gewünscht vor Durchführung von Schritt (2) entfernt werden.

Der PGM-Gehalt des in Teilschritt (1b) bereitgestellten Materials kann beispielsweise im Bereich von 0,01 bis 10 Gew.-% oder 0,01 bis 5 Gew.-% oder bevorzugt im Bereich von 0,1 bis 5 Gew.-% liegen. Ist der PGM-Gehalt nicht bekannt, so kann er vom Fachmann mit üblichen Analysemethoden bestimmt werden, beispielsweise unter Anwendung von ICP-OES (inductively coupled plasma optical emission spectrometry).

In Teilschritt (1c) des erfindungsgemäßen Verfahrens wird mindestens eine Verbindung ausgewählt aus der Gruppe bestehend aus Eisenoxiden, Calciumoxid, Magnesiumoxid, Calciumcarbonat, Magnesiumcarbonat, Natriumcarbonat und Kaliumcarbonat bereitgestellt. Bevorzugt sind hier die Oxide, insbesondere Calciumoxid und Eisenoxide. Die mindestens eine Verbindung kann als basisches Flussmittel während Schritt (2) dienen und bildet gemeinsam mit dem Natrium- und/oder Kaliumalumosilikatträgermaterial während Schritt (2) eine geschmolzene Schlacke als obere Schmelzphase mit niedriger Dichte.

In einem optionalen Teilschritt (1d) kann Reduktionsmittel wie beispielsweise Propan, insbesondere aber festes Reduktionsmittel in Form von Koks, Graphit und/oder Kunststoff (Kunststoffreste, Kunststoffrecyclat) bereitgestellt werden. Dies ist beispielsweise insbesondere dann zweckmäßig, falls das in Teilschritt (1b) bereitgestellte Material PGM-Oxid umfasst. Das Reduktionsmittel kann in Schritt (2) zugeführt oder zugesetzt werden. PGM-Oxid kann so zum elementaren metallischen PGM reduziert und letzteres so der Bildung einer Sammlerlegierung mit dem in Teilschritt (1a) bereitgestellten Kupfer und/oder Silber sowie gegebenenfalls davon verschiedenem weiteren im Verfahren verwendeten Sammlermetall zugänglich gemacht werden.

Wird in Schritt (2) kein anderes schmelzmetallurgisch aufzuarbeitendes Material als das in Teilschritt (1b) bereitgestellte Material verwendet, also nur das in Teilschritt (1b) bereitgestellte Material, so handelt es sich um eine im vorerwähnten Sinne vollständig sortenreine schmelzmetallurgische Aufarbeitung des in Teilschritt (1b) bereitgestellten Materials.

Falls es sich bei dem erfindungsgemäßen Verfahren um ein Verfahren zur lediglich im Wesentlichen sortenreinen schmelzmetallurgischen Aufarbeitung von PGM-haltigem Natrium- und/oder Kaliumalumosilikatträger oder PGM-haltigem Heterogenkatalysator mit Natrium- und/oder Kaliumalumosilikatträger handelt, so wird in einem Teilschritt (1e) mindestens ein von dem in Teilschritt (1b) bereitgestellten Material verschiedenes schmelzmetallurgisch aufzuarbeitendes Material bereitgestellt, beispielsweise in einem Mengenanteil von >0 bis <30 Gew.-%, bevorzugt >0 bis <20 Gew.-%, bezogen auf die Summe (Gesamtmenge) der in den Teilschritten (1b) und (1e) bereitgestellten schmelzmetallurgisch aufzuarbeitenden Materialien. Insbesondere kann es sich bei einem von dem in Teilschritt (1b) bereitgestellten Material verschiedenen schmelzmetallurgisch aufzuarbeitenden Material um PGM-haltigen Heterogenkatalysator auf Basis anderer refraktärer Trägermaterialien als Natrium- und/oder Kaliumalumosilikat (PGM-haltiger Heterogenkatalysator mit von Natrium- und/oder Kaliumalumosilikatträger verschiedenem refraktären Träger) handeln. Ein solches von dem in Teilschritt (1b) bereitgestellten Material verschiedenes schmelzmetallurgisch aufzuarbeitendes Material wird in Schritt (2) gemeinsam mit dem in Teilschritt (1b) bereitgestellten Material verarbeitet, d.h. geschmolzen.

Der PGM-Gehalt eines in einem Teilschritt (1e) bereitgestellten Materials kann beispielsweise im Bereich von 0,01 bis 10 Gew.-% oder 0,01 bis 5 Gew.-% oder bevorzugt im Bereich von 0,1 bis 5 Gew.-% liegen. Ist der PGM-Gehalt nicht bekannt, so kann er vom Fachmann mit üblichen Analysemethoden bestimmt werden, beispielsweise unter Anwendung von ICP-OES.

Bevorzugt liegen alle in den Teilschritten (1a) bis (1c) sowie in den jeweils optionalen Teilschritten (1d) und (1e) bereitgestellten Feststoffmaterialien entweder schon zerkleinert vor oder sie können zweckmäßig vor ihrer Verwendung in Schritt (2) zerkleinert werden. Dabei wird der Fachmann eine gute Handhabbarkeit im Auge behalten und beispielsweise eine zu Staubproblemen führende Zerkleinerung vermeiden.

In Schritt (2) des erfindungsgemäßen Verfahrens werden die in den Teilschritten (1a) bis (1c) sowie gegebenenfalls (1d) und gegebenenfalls (1e) bereitgestellten Materialien gemeinsam bei einer Temperatur im Bereich von 1250 bis <1450°C unter Wahrung eines 100:40- bis 100:20-Gewichtsverhältnisses der in den Teilschritten (1b) und (1c) bereitgestellten Materialien und eines 35:65- bis 80:20-Gewichtsverhältnisses von Kupfer und/oder Silber: PGM geschmolzen. Dabei bildet sich eine Schmelze umfassend oder bestehend aus zwei Phasen unterschiedlicher Dichte, nämlich einer oberen Phase aus geschmolzener Schlacke und einer unteren Phase aus geschmolzener PGM-Sammlerlegierung. Bevorzugt wird im erfindungsgemäßen Verfahren so gearbeitet, dass sich ein zu 100 Gewichtsteilen ergänzendes Verhältnis der beiden Phasen beispielsweise im Bereich von 10 bis 80 Gewichtsteilen, bevorzugt 30 bis 80 Gewichtsteilen PGM-Sammlerlegierung : 20 bis 90 Gewichtsteilen, bevorzugt 20 bis 70 Gewichtsteilen Schlacke ausbildet.

Bei Kenntnis des jeweiligen PGM-Gehaltes des oder der in den Teilschritten (1b) sowie gegebenenfalls (1e) bereitzustellenden bzw. bereitgestellten Materialen und unter Beachtung des zu wahrenden 100:40- bis 100:20-Gewichtsverhältnisses der in den Teilschritten (1b) und (1c) bereitzustellenden bzw. bereitgestellten Materialien und des ebenfalls zu wahrenden 35:65-bis 80:20-Gewichtsverhältnisses von Kupfer und/oder Silber: PGM wählt der Fachmann das Mengenverhältnis zwischen den in Schritt (1) bereitzustellenden bzw. bereitgestellten Materialien aus; bevorzugt beachtet der Fachmann bei der Auswahl auch, dass sich ein zu 100 Gewichtsteilen ergänzendes Verhältnis im Bereich von 10 bis 80 Gewichtsteilen, bevorzugt 30 bis 80 Gewichtsteilen PGM-Sammlerlegierung : 20 bis 90 Gewichtsteilen, bevorzugt 20 bis 70 Gewichtsteilen Schlacke ausbilden kann.

In zweckmäßigen Ausführungsformen des erfindungsgemäßen Verfahrens werden in Schritt (2) nur die in den Teilschritten (1a) bis (1c) sowie jeweils gegebenenfalls (1d) und/oder (1e) bereitgestellten Materialien verwendet. Das erfindungsgemäße Verfahren kann dabei folgende Teilschritte bzw. Schritte umfassen oder daraus bestehen:
(1a) bis (1c) plus (1d) plus (2) bis (5), oder
(1a) bis (1c) plus (1e) plus (2) bis (5), oder
(1a) bis (1c) plus (2) bis (5).

Bevorzugt sind Ausführungsformen ohne Teilschritt (1e), d.h. Ausführungsformen der vorerwähnten vollständig sortenreinen Aufarbeitung.

Der Schmelzvorgang kann in einem üblichen beispielsweise gasbefeuerten Schmelzofen durchgeführt werden. Bevorzugt handelt es sich um einen Schmelzofen mit alkaliresistenter Innenauskleidung beispielsweise aus Chromkorund. Im Allgemeinen wird unter reduzierender Ofenatmosphäre gearbeitet.

Es ist möglich, die in Schritt (1) bereitgestellten Materialien zu mischen und dann portionsweise oder separat portionsweise, beispielsweise abwechselnd portionsweise in den heißen Schmelzofen zu geben. Bevorzugt ist es jedoch, zunächst die in den Teilschritten (1b) und (1c) sowie gegebenenfalls (1e) bereitgestellten Materialien gemischt oder separat portionsweise, beispielsweise abwechselnd portionsweise in den heißen Schmelzofen zu geben und aufzuschmelzen, bevor dann das in Teilschritt (1a) bereitgestellte Kupfer und/oder Silber portionsweise zur Schmelze gegeben wird. Portionsweise Zugabe bedeutet, dass man die Portionsgröße und Zugabefrequenz am Fortschritt des Schmelzprozesses orientiert, sodass die Zugabe in die Schmelze erfolgt, um einen guten Wärmeübergang ins Schmelzgut zu gewährleisten.

Während des Schmelzvorgangs des Schrittes (2) bildet sich eine zwei Phasen von unterschiedlicher Dichte umfassende Schmelze, wobei sich PGM von Natrium- und/oder Kaliumalumosilikat trennt. Bei Verwirklichung von Teilschritt (1e) trennen sich auch PGM und von Natrium- und/oder Kaliumalumosilikat verschiedenes refraktäres Trägermaterial. Das PGM legiert sich mit dem als Sammlermetall(e) fungierenden Kupfer und/oder Silber sowie gegebenenfalls davon verschiedenem weiteren im Verfahren verwendeten Sammlermetall zu einer PGM-Sammlerlegierung und sammelt sich aufgrund der hohen beispielsweise im Bereich von 10 bis 15 g/cm³ liegenden Dichte im unteren Bereich des Schmelzofens. Das Natrium- und/oder Kaliumalumosilikat vermischt sich mit der mindestens einen in Teilschritt (1c) bereitgestellten Verbindung sowie dem gegebenenfalls dem im Teilschritt (1e) bereitgestellten Material entstammenden refraktären Trägermaterial unter Bildung einer sich im oberen Bereich des Schmelzofens ansammelnden Schlacke mit einer niedrigeren beispielsweise im Bereich von 2,5 bis 4 g/cm³ liegenden Dichte. Um Missverständnisse zu vermeiden, die Dichteangaben beziehen sich auf den jeweiligen Feststoff bei 20°C. Die geschmolzene Schlacke schwimmt auf der ebenfalls geschmolzenen PGM-Sammlerlegierung, d.h. es bildet sich ein flüssiges Zweiphasensystem aus zwei übereinander angeordneten Schmelzphasen.

Im Wesentlichen ist die geschmolzene Schlacke das Ergebnis des Zusammenschmelzens des Natrium- und/oder Kaliumalumosilikats aus dem in Teilschritt (1b) bereitgestellten Material mit der in Teilschritt (1c) bereitgestellten mindestens einen Verbindung sowie gegebenenfalls mit refraktärem Trägermaterial aus einem in einem möglichen Teilschritt (1e) bereitgestellten Material. Die geschmolzene Schlacke kann dabei eine chemisch unveränderte Mischung besagter Substanzen sein oder eine chemische Veränderung erfahren haben, beispielsweise als Folge einer Abspaltung von Kohlendioxid aus Carbonat.

Wesentlich für das Gelingen von Schritt (2) bei 1250 bis <1450°C erscheint insbesondere folgende Merkmalskombination:
(i) Bereitstellung von Kupfer und/oder Silber als Sammlermetall(e) gemäß Teilschritt (1a),
(ii) Bereitstellung mindestens einer Verbindung ausgewählt aus der Gruppe bestehend aus Eisenoxiden, Calciumoxid, Magnesiumoxid, Calciumcarbonat, Magnesiumcarbonat, Natriumcarbonat und Kaliumcarbonat gemäß Teilschritt (1c),
(iii) Wahrung eines 100:40- bis 100:20-Gewichtsverhältnisses der in den Teilschritten (1b) und (1c) bereitgestellten Materialien, und
(iv) Wahrung eines 35:65- bis 80:20-Gewichtsverhältnisses von Kupfer und/oder Silber: PGM.

Nach Abschluss von Schritt (2), d.h. nachdem sich das Zweiphasensystem gebildet hat, wird Schritt (3) des erfindungsgemäßen Verfahrens durchgeführt, nämlich das Abtrennen der oberen Phase niedriger Dichte aus geschmolzener Schlacke von der unteren Phase hoher Dichte aus geschmolzener PGM-Sammlerlegierung unter Ausnutzung des Dichteunterschieds. Zu dem Zweck kann der Inhalt des Schmelzofens nach dem bekannten Dekantierungsprinzip beispielsweise sorgfältig ausgegossen werden oder man sticht die geschmolzene Schlackephase oder die PGM-Sammlerlegierungsphase ab.

Die die untere Phase bildende geschmolzene PGM-Sammlerlegierung kann zum Beispiel in geeignete Behälter gegossen werden und im nachfolgenden Schritt (4) abkühlen und dabei erstarren gelassen werden.

Nach Abkühlen und Erstarren der PGM-Sammlerlegierung während Schritt (4) kann letztere in Schritt (5) vereinnahmt werden. Die PGM-Sammlerlegierung kann dann einer weiteren konventionellen Raffination unterzogen werden, z.B. einer elektrometallurgischen und/oder hydrometallurgischen Raffination, um schließlich das oder die einzelnen PGM entweder als Metall oder als PGM-Verbindung oder beispielsweise als Lösung derselben zu erhalten.

## Patentansprüche

1. Verfahren zur Herstellung einer PGM-Sammlerlegierung umfassend die Schritte:
(1) Bereitstellen von (a) Kupfer und/oder Silber, (b) schmelzmetallurgisch aufzuarbeitendem Material in Form mindestens eines mit mindestens einem PGM ausgestatteten Natrium- und/oder Kaliumalumosilikatträgers, und (c) mindestens einer Verbindung ausgewählt aus der Gruppe bestehend aus Eisenoxiden, Calciumoxid, Magnesiumoxid, Calciumcarbonat, Magnesiumcarbonat, Natriumcarbonat und Kaliumcarbonat,
(2) gemeinsames Schmelzen der in Schritt (1) bereitgestellten Materialien bei einer Temperatur im Bereich von 1250 bis <1450°C unter Wahrung eines 100:40- bis 100:20-Gewichtsverhältnisses der in den Teilschritten (1b) und (1c) bereitgestellten Materialien und eines 35:65- bis 80:20-Gewichtsverhältnisses von Kupfer und/oder Silber: PGM unter Bildung einer zwei Phasen von unterschiedlicher Dichte umfassenden Schmelze,
(3) Abtrennen der oberen Phase niedriger Dichte aus geschmolzener Schlacke von der unteren Phase hoher Dichte aus geschmolzener PGM-Sammlerlegierung unter Ausnutzung des Dichteunterschieds,
(4) Abkühlen und Erstarren lassen der voneinander abgetrennten Schmelzphasen, und
(5) Vereinnahmen der erstarrten PGM-Sammlerlegierung.

2. Verfahren nach Anspruch 1, wobei es sich bei dem in Teilschritt (1b) bereitgestellten schmelzmetallurgisch aufzuarbeitenden Material um PGM-haltigen Heterogenkatalysator mit Natrium- und/oder Kaliumalumosilikatträger handelt.

3. Verfahren nach Anspruch 1 oder 2, wobei der PGM-Gehalt des in Teilschritt (1b) bereitgestellten Materials im Bereich von 0,01 bis 10 Gew.-% liegt.

4. Verfahren nach einem der vorhergehenden Ansprüche, wobei in einem Teilschritt (1d) Reduktionsmittel bereitgestellt und in Schritt (2) zugesetzt wird.

5. Verfahren nach einem der vorhergehenden Ansprüche, wobei in Schritt (2) als schmelzmetallurgisch aufzuarbeitendes Material nur das in Teilschritt (1b) bereitgestellte Material verwendet wird.

6. Verfahren nach einem der Ansprüche 1 bis 4, wobei in einem Teilschritt (1e) mindestens ein von dem in Teilschritt (1b) bereitgestellten Material verschiedenes schmelzmetallurgisch aufzuarbeitendes Material bereitgestellt und in Schritt (2) gemeinsam mit dem in Teilschritt (1b) bereitgestellten Material geschmolzen wird.

7. Verfahren nach Anspruch 6, wobei das in Teilschritt (1e) bereitgestellte Material einen Mengenanteil von >0 bis <30 Gew.-%, bezogen auf die Summe der in den Teilschritten (1b) und (1e) bereitgestellten schmelzmetallurgisch aufzuarbeitenden Materialien ausmacht.

8. Verfahren nach einem der vorhergehenden Ansprüche, wobei so gearbeitet wird, dass sich ein zu 100 Gewichtsteilen ergänzendes Verhältnis der beiden Phasen im Bereich von 10 bis 80 Gewichtsteilen PGM-Sammlerlegierung : 20 bis 90 Gewichtsteilen Schlacke ausbildet.

## Claims

1. A method for producing a PGM collector alloy, comprising the steps:
(1) providing (a) copper and/or silver, (b) material to be processed by means of melting metallurgy, in the form of at least one sodium and/or potassium aluminium silicate carrier equipped with at least one PGM, and (c) at least one compound selected from the group consisting of iron oxides, calcium oxide, magnesium oxide, calcium carbonate, magnesium carbonate, sodium carbonate, and potassium carbonate,
(2) joint melting of the materials provided in step (1) at a temperature in the range of from 1250 to <1450°C by maintaining a 100:40 to 100:20 weight ratio of the materials provided in the substeps (1b) and (1c), and a 35:65 to 80:20 weight ratio of copper and/or silver: PGM by forming a melt comprising two phases of different density,
(3) separating the upper phase of low density of melted slag from the lower phase of high density of melted PGM collector alloy by utilizing the density difference,
(4) allowing the melt phases, which have been separated from one another, to cool down and solidify, and
(5) collecting the solidified PGM collector alloy.

2. The method according to claim 1, wherein the material, which is provided in the substep (1b) and which is to be processed by means of melting metallurgy, is PGM-containing heterogeneous catalyst comprising sodium and/or potassium aluminium silicate carrier.

3. The method according to claim 1 or 2, wherein the PGM content of the material provided in substep (1b) lies in the range of from 0.01 to 10% by weight.

4. The method according to any one of the preceding claims, wherein reducing agent is provided in a substep (1d) and is added in step (2).

5. The method according to any one of the preceding claims, wherein only the material provided in substep (1b) is used in step (2) as material, which is to be processed by means of melting metallurgy.

6. The method according to any one of claims 1 to 4, wherein at least one material, which is to be processed by means of melting metallurgy and which differs from the material provided in substep (1b), is provided in a substep (1e) and is melted in step (2) jointly with the material provided in substep (1b).

7. The method according to claim 6, wherein the material provided in substep (1e) accounts for a proportion of from >0 to <30% by weight, based on the sum of the materials, which are be processed by means of melting metallurgy and which are provided in the substeps (1b) and (1e).

8. The method according to any one of the preceding claims, wherein operation takes place such that a ratio, which combines to form 100 parts by weight, of the two phases in the range of from 10 to 80 parts by weight of PGM collector alloy : 20 to 90 parts by weight of slag forms.

## Revendications

1. Procédé de fabrication d'un alliage pour collecteur PGM, comprenant les étapes :
(1) préparation (a) de cuivre et/ou d'argent, (b) de matériau à traiter par la métallurgie de fusion, sous la forme au moins d'un porteur de silicate d'aluminium-sodium et/ou d'aluminium-potassium, doté au moins d'un PGM, et (c) au moins d'une liaison sélectionnée dans le groupe composé d'oxydes de fer, d'oxyde de calcium, d'oxyde de magnésium, de carbonate de calcium, de carbonate de magnésium, de carbonate de sodium et de carbonate de potassium.
(2) fusion commune des matériaux préparés dans l'étape (1) à une température de l'ordre de 1250 et < 1450°C en maintenant un rapport en poids de 100:40 à 100:20 des matériaux préparés dans les étapes partielles (1b) et (1c) et un rapport en poids de 35:65 à 80:20 du cuivre et/ou de l'argent : MGP avec la formation d'une fusion englobant deux phases de densités différentes,
(3) séparation de la phase supérieure de faible densité à partir de scories fondues et de la phase inférieure de densité élevée à partir d'alliage pour collecteur PGM fondu avec l'utilisation de la différence de densité,
(4) refroidissement et solidification des phases de fusion séparées, et
(5) récupération de l'alliage pour collecteur PGM solidifié.

2. Procédé conformément à la revendication 1, dans lequel le matériau à traiter par la métallurgie de fusion, préparé dans l'étape partielle (1b), est un catalyseur hétérogène contenant des PGM, avec porteur de silicate d'aluminium-sodium et/ou d'aluminium-potassium.

3. Procédé conformément à la revendication 1 ou 2, dans lequel le taux de PGM du matériau préparé dans l'étape partielle (1b) est de l'ordre de 0,01 à 10% en poids.

4. Procédé conformément à l'une des revendications précédentes, dans lequel un agent réducteur est préparé dans une étape partielle (1d) et est ajouté dans l'étape (2).

5. Procédé conformément à l'une des revendications précédentes, dans lequel seulement le matériau préparé dans l'étape partielle (1b) est utilisé dans l'étape (2) comme matériau à traiter par la métallurgie de fusion.

6. Procédé conformément à l'une des revendications 1 à 4, dans lequel au moins un matériau à traiter par la métallurgie de fusion, différent du matériau préparé dans l'étape partielle (1b), est préparé dans une étape partielle (1e) et fondu dans l'étape (2) avec le matériau préparé dans l'étape partielle (1b).

7. Procédé conformément à la revendication 6, dans lequel le matériau préparé dans l'étape partielle (1e) représente une proportion de > 0 à < 30 % en poids par rapport à la somme des matériaux à traiter par la métallurgie de fusion, préparés dans les étapes partielles (1b) et (1e).

8. Procédé conformément à l'une des revendications précédentes, dans lequel le travail est réalisé de manière à ce qu'il se forme un rapport complétant 100 parts en poids des deux phases, de l'ordre de 10 à 80 parts en poids d'alliage collecteur PGM : 20 à 90 parts en poids de scories.
